# EUROPÄISCHE PATENTANMELDUNG

(11) **EP 1 847 645 A2**
(43) Veröffentlichungstag der Anmeldung: **24.10.2007**
(21) Anmeldenummer: 07001579.7
(22) Anmeldetag: 25.01.2007
(51) Int. Cl.: D21B 1/12, D21B 1/34, D21D 1/38

(54) **Verfahren zur Dispergierung von Papierfaserstoff**

(30) Priorität: 06.04.2006 DE 102006016174
(71) Anmelder: Voith Patent GmbH, 89522 Heidenheim (DE)
(72) Erfinder: Hess, Harald, 88287 Grünkraut (DE); Kemper, Martin, 88250 Weingarten (DE)

(57) **Zusammenfassung**

Das Verfahren zur Dispergierung von Papierfaserstoff wird in einer bevorzugten Ausführungsform so durchgeführt, dass zunächst eine Papierstoffsuspension (S2) in einer Eindickung (2) in Dickstoff (G) und Filtrat (F) aufgeteilt wird. Der Dickstoff (G) wird erfindungsgemäß in einem Kompressionsrefiner dispergiert und in bevorzugten Ausführungsformen des Verfahrens anschließend flotiert. Auf diese Weise ist eine besonders wirtschaftliche und schonende Aufbereitung möglich.

## Beschreibung

Die Erfindung betrifft ein Verfahren zur Dispergierung von Papierfaserstoff gemäß dem Oberbegriff des Anspruchs 1.

Verfahren der o.g. Art werden z.B. zur Qualitätsverbesserung von Faserstoff eingesetzt, der aus Altpapier gewonnen wurde. Es ist bekannt, dass Papierfaserstoffe durch Dispergieren homogenisiert und dadurch wesentlich verbessert werden können. Restliche (resistente) Faserstippen können aufgelöst werden. An den Fasern anhaftende harte Störstoffe, insbesondere Druckfarben-Partikel, werden abgetrennt. Weiche Störstoff-Partikel werden so weit zerkleinert, dass sie im fertigen Papier nicht mehr sichtbar sind. Außerdem können sie an der Faser fixiert werden, was die Papierherstellung verbessert. Die für den jeweiligen Zweck optimale Wirkung des Verfahrens lässt sich durch Wahl der Parameter, insbesondere Konsistenz, Temperatur und spezifische Arbeit einstellen.

Zur Dispergierung wird bisher ein hochkonsistenter Papierfaserstoff hergestellt, der zumeist einen Trockengehalt zwischen 15 und 35 % aufweist. In vielen Fällen wird bei einer Temperatur dispergiert, die weit über der Umgebungstemperatur liegt. Disperger, die für solche Verfahren eingesetzt werden, haben eine hohe Energiedichte. Die Energie für die auf den Papierfaserstoff übertragene spezifische Arbeit mit 30 bis 200 kWh/t stellt einen wesentlichen Kostenfaktor für das Verfahren dar.

Durch das Eindicken wird ein beträchtlicher Teil des vorher noch im Faserstoff vorhandenen Wassers ausgepresst, wodurch erstens seine Viskosität bei der Dispergierung wesentlich ansteigt und zweitens gegebenenfalls weniger Wasser mit erwärmt werden muss. Eine verwendbare Maschine für die Eindickung ist die Schneckenpresse. Bei einer Schneckenpresse wird die Faserstoffsuspension zwischen einer Förderschnecke und einem diese umgebenden gelochten Mantel ausgepresst, wobei das Wasser durch die Löcher des Mantels austritt. Der dabei entstehende hochkonsistente Papierfaserstoff wird axial aus der Maschine ausgedrückt. Es kann aber auch mit einer Siebpresse entwässert werden, die bekanntlich ein oder zwei umlaufende Endlossiebe aufweist, durch die ein Filtrat hindurch tritt.

Aus der Publikation "Wochenblatt für Papierfabrikation", Heft 7/1978, Seiten 275 bis 277, ist ein Dispergierverfahren dieser Art bekannt.

Aus der DE 102 56 519 ist ein anderes Verfahren bekannt, bei dem eine Fraktionierung vor einer Dispergierung stattfindet. Dabei teilt die Fraktionierung den Papierstoff in Kurzfasern und Langfasern auf. Die Langfaserfraktion wird eingedickt und z.B. in einem Scheibendisperger dispergiert.

Es ist Aufgabe der Erfindung, ein Verfahren zu schaffen, bei dem die Dispergierung so durchgeführt wird, dass das Gesamtverfahren besonders effektiv und wirtschaftlich ist. Das Verfahren soll zu einem homogenen und sauberen Faserstoff führen.

Diese Aufgabe wird durch die im Kennzeichen des Anspruchs 1 genannten Merkmale vollständig gelöst.

Der besondere Vorteil der Erfindung ergibt sich daraus, dass die Dispergierung der Grobfraktion unter Verwendung eines Kompressionsrefiners erfolgt, der nach einem Verfahren arbeiten kann, das z.B. in der DE-A-102 36 962 beschrieben wird. Es wird bisher zur Mahlung ("Kompressionsmahlung"), also Veränderung der Fasern, verwendet und/oder zur Zerkleinerung von Druckfarbenpartikeln. Dieses Verfahren bringt aber auch eine sehr gute Dispergierung ohne Faserschädigung. Druckfarbenpartikel werden schonend von den Fasern abgelöst. Klebende Verunreinigungen (Stickies) werden so zerkleinert, dass sie sich leichter flotieren oder auswaschen lassen. Diese Bearbeitung kann im Vergleich zum Scheibendisperger oder Kneter bei bedeutend geringerer Konsistenz, z.B. 6 bis 12 %, durchgeführt werden, was apparativen und energetischen Aufwand einspart. Die spezifische Arbeit für diesen Zweck liegt dann z.B. bei etwa 20 bis 60 kWh/t.

Die Eindickung wird so durchgeführt werden, dass möglichst alle Fasern, Feinstoffe und Störstoffe in den Dickstoff gelangen. Das Filtrat enthält dann wenig Feststoffe. Vorteilhaft ist eine Eindickung mit einer Filtervorrichtung, Siebvorrichtung (Schneckenpresse) oder einem entsprechend ausgestalteten und betriebenen Drucksortierer.

Die Erfindung wird erläutert an Hand von Zeichnungen. Dabei zeigen
- Figur 1:: Schema mit einer Anlage zur Durchführung des Verfahrens;
- Figur 2:: Schema mit einer anderen Anlage zur Durchführung des Verfahrens;
- Figur 3:: Schema eines 2-Loop-Deinkingsystems mit erfindungsgemäßer Dispergierung.

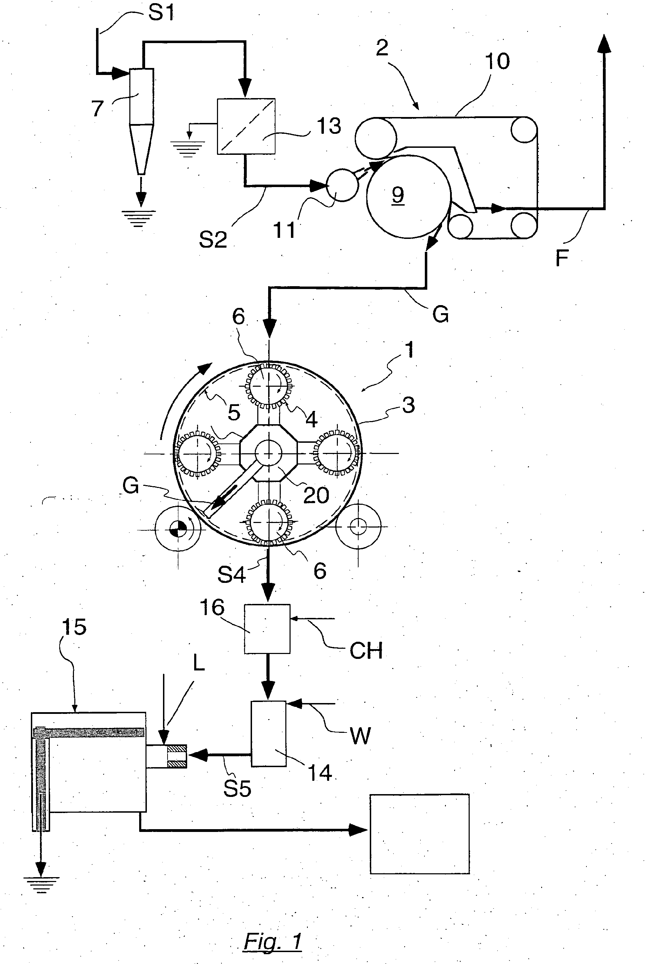

In einer vereinfachten Darstellung zeigt die Fig. 1 ein Ausführungsbeispiel mit den wichtigsten Apparaturen, die man bei Durchführung des erfindungsgemäßen Verfahrens verwenden kann. Die z.B. in einem hier nicht gezeigten Stofflöser erzeugte Papierfaserstoffsuspension S1 wird durch Dickstoffreiniger 7 und Drucksortierer 13 geführt, wodurch grobe Störstoffe des Altpapiers entfernt werden. Die genannten Trennvorrichtungen sind exemplarisch zu verstehen. Es sind diverse Möglichkeiten bekannt, um eine verschmutzte Papierfasersuspension so weit zu reinigen, dass sie in den hier beschriebenen folgenden Apparaten verarbeitet werden kann. Die gereinigte Papierfaserstoffsuspension S2 gelangt als nächstes in eine Eindickvorrichtung 2 zur Bildung eines Dickstoffes G und eines Filtrates F.

Durch die Art der Eindickvorrichtung 2 und die Betriebsbedingungen bei der Eindickung lässt sich deren Trennwirkung einstellen. Dabei sollen z.B. alle in der Papierfasersuspension S2 enthaltenen Feststoffe, seien sie nun kurze oder lange Fasern, Feinstoffe, Füttstoffe oder Störstoffe, in den Dickstoff G gelangen. Das Filtrat F ist dann relativ sauberes Rückwasser, das wieder verwendet werden kann. Solche Eindickvorrichtungen für Faserstoffe sind bekannt. Sie dienen dazu, das Wasser vom Feststoff zu trennen (Filter). Eine geeignete technische Ausführungsform ist z.B. in der Patentschrift DE 30 05 681 beschrieben. Bei einer solchen Waschvorrichtung wird die auszuwaschende Suspension S mit Hilfe eines unter Druck stehenden Stoffauflaufes 11 zwischen einen undurchlässigen Zylinder 9 und ein durchlässiges umlaufendes Siebband 10 mit geringer Konsistenz turbulent eingespritzt. Die für das Verfahren optimalen Betriebsparameter sind leicht einstellbar. Da keine Feststoffe ausgewaschen werden sollen, ist ein relativ hoher Durchsatz möglich. Es sind auch Vorrichtungen mit zwei umlaufenden Siebbändern bekannt, die ebenfalls zur Fraktionierung benutzbar sind. Ein Beispiel zeigt die EP 0 341 913. Der zwischen Siebband 10 und Zylinder 9 entwässerte Faserstoff wird anschließend als Dickstoff G zur Dispergierung geführt.

Der Dickstoff G kann in dem in Fig. 1 gezeigten Fall ohne weitere Eindickung, z.B. mit einer Konsistenz zwischen 5 % und 10 %, einer Dispergierung 1 zugeführt werden. Es ist von besonderem Vorteil, dass die benötigte Konsistenz deutlich unterhalb liegen kann, die bei bekannten Dispergierverfahren (Scheibendisperger, Kneter) erforderlich ist. Zum Dispergieren wird hier eine rotierende Trommel 3 verwendet, die innen eine Mahlfläche 5 aufweist. Auf diese wälzen sich eine oder mehrere Mahlwalzen 6 ab, die mit ihren Drehachsen in einer Haltevorrichtung 20 gelagert sind. Ihre außen liegenden Mahlflächen 4 wirken mit den innen liegenden Mahlflächen 5 der Trommel 3 zusammen. Der zu dispergierende Dickstoff G wird auf die Mahlfläche 5 aufgetragen, auf der er sich in Folge der Fliehkräfte anlegt. In einem anderen hier nicht dargestellten Fall werden die Drehachsen der Mahlwalzen 6 auf Kreisbahnen um die Mitte der Trommel 3 bewegt. Bei einer radialen Beweglichkeit der Mahlwalzen 6 können dann Zentrifugalkräfte auf den Dickstoff G einwirken. Verschiedene Vorrichtungen zur Kompressionsmahlung sind z.B. aus den Anmeldungen DE 103 37 921, DE 103 37 922, DE 103 56 377 und DE 103 58 217 bekannt.

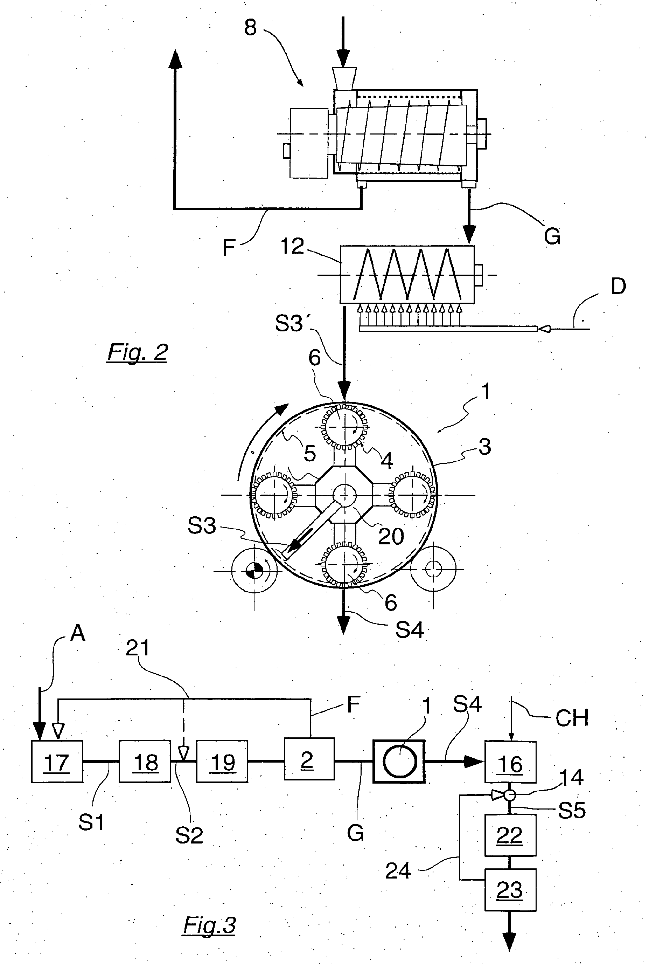

In einem anderen Beispiel gemäß Fig. 2 wird als Eindickvorrichtung eine Schneckenpresse 8 verwendet. Das abgepresste Wasser W1 kann mit Vorteil wieder zum Auflösen verwendet werden. Je nach Anforderungen an die Dispergierung 1 kann diese bei erhöhten Temperaturen stattfinden. In Fällen, in denen es hauptsächlich auf die Ablösung der Druckfarben von den Fasern ankommt, können die Temperaturen im mittleren Bereich, z.B. bei 40° C liegen, also in einem Bereich, der keine zusätzliche Erwärmung erforderlich macht. Im Beispiel der in Fig. 2 gezeigten Anlage hingegen wird der Dickstoff G erhitzt, wozu hier als Beispiel eine Heizschnecke 12 gezeigt ist. Anschließend erfolgt die erfindungsgemäße Dispergierung 1 des erhitzten Papierfaserstoffes S3'.

Die spezifische Arbeit, die bei der Dispergierung 1 auf den Faserstoff übertragen wird, wird üblicherweise auf einen Wert zwischen 20 und 100 kWh/t, vorzugsweise ca. 20 kWh/t, eingestellt.

Mit besonderem Vorteil kann der dispergierte Faserstoff S4 nach einer entsprechenden Verdünnung 14 mit Wasser W in einer Flotationsanlage 15 (s. Fig. 1) von feinen Verunreinigungen gereinigt werden. Insbesondere ist diese Flotationsvorrichtung 15 dazu vorgesehen, um die durch die Dispergierung 1 von den Fasern abgelösten Druckfarben und Stickies zu entfernen. Der Flotationsvorgang kann bei diesem Verfahren besonders effektiv ablaufen, da bei der vorangegangenen erfindungsgemäß durchgeführten Dispergierung 1 wenig Feinstoffe neu gebildet werden. Gerade Feinstoffe beeinträchtigen die Flotationswirkung. Ist der Feinstoffgehalt geringer, kann mit höherer Konsistenz flotiert werden. Das wiederum führt zu beträchtlichen Einsparungen bei der Flotationsanlage 15.

Oft ist es zweckmäßig, den dispergierten Faserstoff zu bleichen. Das erfolgt in diesem Beispiel nach der Dispergierung 1 in einer Bleichvorrichtung 16, die mit Bleichmitteln CH betrieben wird. Wenn sich die zur Dispergierung 1 eingestellte Konsistenz auch zur Bleiche eignet, kann eine Eindickung vor der Bleiche entfallen. Auch bei der Bleiche wirkt es sich vorteilhaft aus, dass bei der erfindungsgemäßen Dispergierung nur wenig Feinstoff gebildet wird.

Oft wird ein großer Teil der flotierbaren Störstoffe in einem ersten Flotationsschritt 19 entfernt (s. Fig. 3). Solche Verfahren, auch 2-Loop-Deinking-Systeme genannt, sind für die Erfindung besonders geeignet. Dabei dient der erste Flotationsschritt 19 zur Beseitigung der schon bei der Auflösung 17 frei gesetzten bzw. von den Fasern abgelösten Störstoffen. Ein solches System ist als Blockschema in Fig. 3 dargestellt. Die in der Auflösung 17 gebildete wässrige Faserstoffsuspension S1 wird insbesondere, wenn sie aus Altpapier A gebildet wurde, zunächst in einer Grobreinigung 18 von groben Störstoffen gereinigt. Es schließt sich dann eventuell nach weiterer Verdünnung der erste Flotationsschritt 19 an. Bei diesem wird ein großer Teil der feinen Störstoffe, insbesondere der Druckfarben und Klebepartikeln (Stickies) aus dem Kreislauf abgeschieden. Eine nachfolgende Eindickung 2 stellt die Konsistenz her, die bei der sich anschließenden Dispergierung 1 benötigt wird. Das bei der Eindickung 2 anfallende Filtrat F wird als Rückwasser 21 vorzugsweise stromaufwärts wieder zugegeben, üblicherweise großenteils in die Auflösung 17. Nach der Dispergierung 1 wird der Faserstoff in die Bleichvorrichtung 16 gegeben, auf die bereits eingegangen worden ist. Der folgende zweite Flotationsschritt 22 entfernt - wie bereits an Hand der Flotationsanlage 15 in Fig. 1 beschrieben - die restlichen feinen Störstoffe. Um die Konsistenz für die nachfolgenden Bearbeitungsschritte, die hier nicht weiter erklärt sind, herzustellen, wird wiederum eine Eindickung 23 durchgeführt. Das dabei anfallende Rückwasser 24 bleibt vorzugsweise in diesem zweiten Loop, d.h. es wird z.B. zur Verdünnung 14 nach der Bleichvorrichtung 16 verwendet. Dieses Schema ist sehr vereinfacht dargestellt, zeigt aber die zur Durchführung einer besonders günstigen Ausführungsform des Verfahrens wesentlichen Schritte.

### Bezugszeichenliste

- 1.: Dispergierung
- 2.: Eindickung
- 3.: Trommel
- 4.: außen liegende Mahlflächen
- 5.: innen liegende Mahlflächen
- 6.: Mahlwalze
- 7.: Dickstoffreiniger
- 8.: Schneckenpresse
- 9.: Zylinder
- 10.: Siebband
- 11.: Stoffauflauf
- 12.: Heizschnecke
- 13.: Drucksortierer
- 14.: Verdünnung
- 15.: Flotationsanlage
- 16.: Bleichvorrichtung
- 17.: Auflösung
- 18.: Grobreinigung
- 19.: erster Flotationsschritt
- 20.: Haltevorrichtung
- 21.: Rückwasser
- 22.: zweiter Flotationsschritt
- 23.: Eindickung.
- 24.: Rückwasser

## Patentansprüche

1. Verfahren zur Dispergierung eines insbesondere aus Altpapier gewonnenen Papierfaserstoffes, welches von einer wässrigen Faserstoffsuspension (S) ausgeht, die in einer Dispergierung (1) behandelt wird,
**dadurch gekennzeichnet,**
**dass** die Dispergierung (1) unter Verwendung eines Kompressionsrefiners durchgeführt wird.

2. Verfahren nach Anspruch 1,
**dadurch gekennzeichnet,**
**dass** die Faserstoffsuspension (S) durch Eindickung in Dickstoff (G) und Filtrat (F) aufgeteilt wird, wonach der Dickstoff (G) in der Dispergierung (1) behandelt wird.

3. Verfahren nach Anspruch 1 oder 2,
**dadurch gekennzeichnet,**
**dass** die Dispergierung (1) in einem Verfahren durchgeführt wird, bei dem die Faserstoffsuspension (S) oder der Dickstoff (G) in einer zwischen zwei zusammenwirkenden Mahlflächen (4, 5) gebildeten Mahlzone dispergiert wird, deren Relativbewegung zueinander eine Abwälzbewegung ist.

4. Verfahren nach Anspruch 1 oder 2,
**dadurch gekennzeichnet,**
**dass** die Dispergierung (1) in einem Verfahren durchgeführt wird, bei dem die Faserstoffsuspension (S) oder der Dickstoff (G) in einer zwischen zwei zusammenwirkenden Mahlflächen gebildeten Mahlzone dispergiert wird und dass die Relativgeschwindigkeit zwischen dem Faserstoff und den Mahlflächen, in HauptBewegungsrichtung der Mahlflächen gesehen, an der Stelle, an der sich zwei Mahlflächen (4, 5) in der Mahlzone am nächsten sind, kleiner als 10 % der Absolutgeschwindi,gkeit der schneller angetriebenen Mahlfläche ist.

5. Verfahren nach einem der voran stehenden Ansprüche,
**dadurch gekennzeichnet,**
**dass** die Dispergierung (1) bei einer Konsistenz zwischen 3 und 20 %, vorzugsweise zwischen 5 und 10 %, erfolgt.

6. Verfahren nach einem der voran stehenden Ansprüche,
**dadurch gekennzeichnet,**
**dass** die bei, der Dispergierung (1) übertragene spezifische Arbeit zwischen 20 und 100 kWh/t, vorzugsweise ca. 30 kWh/t, liegt.

7. Verfahren nach einem der voran stehenden Ansprüche,
**dadurch gekennzeichnet,**
**dass** die Eindickung (2) bei einer Ausgangskonsistenz zwischen 0,6 und 5 % durchgeführt wird.

8. Verfahren nach einem der Ansprüche 2 bis 7,
**dadurch gekennzeichnet,**
**dass** die Eindickung (2) in einer Eindickvorrichtung durchgeführt wird, die so eingestellt wird, dass das Filtrat einen Feststoffgehalt von höchstens 0,1 % hat.

9. Verfahren nach Anspruch 2 bis 8,
**dadurch gekennzeichnet,**
**dass** die Eindickung (2) in einer Schneckenpresse (8) durchgeführt wird.

10. Verfahren nach einem der Ansprüche 2 bis 8,
**dadurch gekennzeichnet,**
**dass** die Eindickung (2) in einem Scheibenfilter durchgeführt wird.

11. Verfahren nach einem der Ansprüche 2 bis 8,
**dadurch gekennzeichnet,**
**dass** die Eindickung (2) in einem Drucksortierer durchgeführt wird.

12. Verfahren nach einem der voran stehenden Ansprüche,
**dadurch gekennzeichnet,**
**dass** die Dispergierung (1) bei einer Temperatur unter 80° C durchgeführt wird.

13. Verfahren nach Anspruch 12,
**dadurch gekennzeichnet,**
**dass** die Dispergierung (1) bei einer Temperatur unter 50° C durchgeführt wird.

14. Verfahren nach einem der voran stehenden Ansprüche,
**dadurch gekennzeichnet,**
**dass** die Dispergierung (1) so durchgeführt wird, dass Druckfarbenpartikel von den Fasern abgetrennt werden.

15. Verfahren nach einem der voran stehenden Ansprüche,
**dadurch gekennzeichnet,**
**dass** aus dem dispergierten Faserstoff eine Suspension (S5) gebildet wird, die in einer Flotationsvorrichtung, insbesondere einer Flotationsanlage (15), flotiert wird.

16. Verfahren nach Anspruch 15,
**dadurch gekennzeichnet,**
**dass** die Flotationsvorrichtung, insbesondere Flotationsanlage (15), bei einer Konsistenz zwischen 1,1 und 2,5 %, vorzugsweise 1,2 bis 2 %, betrieben wird.

17. Verfahren nach einem der voran stehenden Ansprüche,
**dadurch gekennzeichnet,**
**dass** der dispergierte Faserstoff (S4) gebleicht wird.

18. Verfahren nach Anspruch 17,
**dadurch gekennzeichnet,**
**dass** die Bleiche bei einer Konsistenz zwischen 8 und 15 % durchgeführt wird.

19. Verfahren nach einem der voran stehenden Ansprüche,
**dadurch gekennzeichnet,**
**dass** die Dispergierung (1) so durchgeführt wird, dass im Papierstoff enthaltene Störstoffe unter die Sichtbarkeitsgrenze gebracht werden.

20. Verfahren nach einem der voran stehenden Ansprüche,
**dadurch gekennzeichnet,**
**dass** ein erster Flotationsschritt vor der Dispergierung (1) und ein zweiter Flotationsschritt nach der Dispergierung (1) durchgeführt wird.
